# FASCICULE DE BREVET EUROPEEN

(11) **EP 3 684 575 B1**
(45) Date de publication et mention de la délivrance du brevet: **18.08.2021**
(21) Numéro de dépôt: 18796704.7
(22) Date de dépôt: 19.09.2018
(51) Int. Cl.: C04B 35/80, C04B 35/117, C04B 35/14, C04B 35/447, C04B 35/56, C04B 35/58, C04B 35/591, F01D 9/04, F02K 1/82, B28B 19/00, B28B 23/00, F23R 3/00, C04B 35/185, C04B 35/488, C04B 35/563, C04B 35/584, B29C 70/48, F01D 25/24, C04B 35/18, F01D 5/28

(54) **PROCÉDÉ D'INJECTION D'UNE BARBOTINE CHARGÉE DANS UNE TEXTURE FIBREUSE**
VERFAHREN ZUM EINSPRITZEN EINER BELADENEN AUFSCHLÄMMUNG IN EINE FASERIGE TEXTUR
PROCESS FOR INJECTING A LOADED SLURRY INTO A FIBROUS TEXTURE

(30) Priorité: 21.09.2017 FR 1758744
(43) Date de publication de la demande: 29.07.2020
(73) Titulaire: Safran Ceramics, 33185 Le Haillan (FR)
(72) Inventeur: EBERLING-FUX, Nicolas, 77550 Moissy-Cramayel (FR); GOULLIANNE, Eddy, 77550 Moissy-Cramayel (FR); ROS, William, 77550 Moissy-Cramayel (FR)
(74) Mandataire: Cabinet Beau de Loménie
(86) Numéro de dépôt international: PCT/FR2018/052287
(87) Numéro de publication internationale: WO 2019/058054

(56) Documents cités:
- WO-A1-2011/131857
- WO-A1-2016/102837
- WO-A1-2016/102839
- WO-A1-2017/060601
- NORDLUND ET AL: "Particle deposition mechanisms during processing of advanced composite materials", COMPOSITES PART A: APPLIED SCIENCE AND MANUFACTURING, ELSEVIER, AMSTERDAM, NL, vol. 38, no. 10, 1 octobre 2007 (2007-10-01), pages 2182-2193, XP022285451, ISSN: 1359-835X, DOI: 10.1016/J.COMPOSITESA.2007.06.009

## Description

### Arrière-plan de l'invention

La présente invention concerne un procédé de fabrication d'une pièce en matériau composite thermostructural notamment de type Oxyde/Oxyde ou à matrice céramique (CMC), c'est-à-dire comportant un renfort fibreux formé à partir de fibres en matériau céramique réfractaire densifié par une matrice également en matériau céramique réfractaire. L'invention concerne plus particulièrement la fabrication de pièces en matériau composite Oxyde/Oxyde ou CMC par voie liquide comprenant une étape d'imprégnation d'un renfort fibreux avec une barbotine chargée, par exemple de particules d'alumine dans le cas d'un matériau composite Oxyde/Oxyde ou de particules de carbure de silicium (SiC) dans le cas d'un matériau composite CMC.

L'étape d'imprégnation est réalisée par injection sous pression d'une barbotine chargée (généralement entre 10% et 40% en volume) au sein d'un renfort fibreux (procédé STM pour « Slurry Tranfer Molding »). Les barbotines utilisées pour l'injection sont faiblement chargées afin notamment de présenter une viscosité stable pour le transport des charges dans le volume du renfort fibreux. Dans un tel cas, il est nécessaire de drainer ou filtrer la phase liquide de la barbotine afin d'obtenir un remplissage optimal des porosités résiduelles présentes dans renfort fibreux avec les charges solides. Un tel procédé est notamment décrit dans le document WO 2016/102839.

Dans le cas d'un matériau SiC/SiC, les étapes d'injection et de filtration de la barbotine chargée sont réalisées sur des ébauches fibreuses obtenues par tissage tridimensionnel (3D) et consolidées ou pré-densifiées par infiltration chimique en phase gazeuse (CVI). L'ébauche incompressible et à réseau de porosité figé présente une porosité globale résiduelle inter-fils comprise entre 25% et 45% en volume. Or, les ébauchent fibreuses 3D ou formées d'un empilement de strates fibreuses présentent un réseau de porosité complexe qui entraîne des difficultés dans le contrôle du remplissage de l'ébauche fibreuse par la barbotine chargée. Ainsi, les étapes d'injection ou de filtration de la suspension chargée dans la texture fibreuse ne sont pas bien maîtrisées, ce qui entraîne la présence de porosités dans la pièce finale.

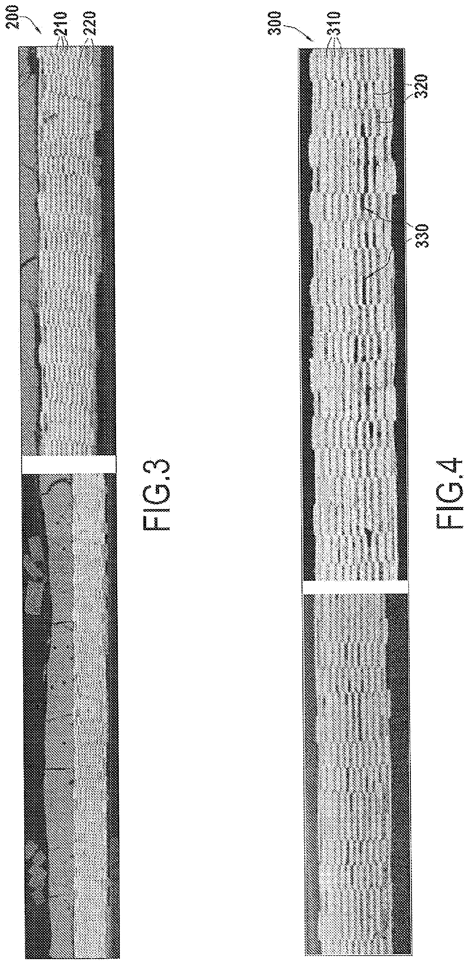

La figure 4 montre deux photographies microscopiques d'une coupe d'une pièce 300 en matériau composite SiC/SiC selon l'art antérieur, à savoir ici un renfort en fibres SiC 310 formé ici par tissage 3D entre des couches de fils de trame et de fils de chaîne suivant une armure interlock et densifié par une matrice SiC 320. La pièce 300 a été fabriquée de la même manière que décrite précédemment, c'est-à-dire par injection d'une barbotine chargée de particules de SiC depuis la ou les tranches ou la ou les faces d'une texture fibreuse SiC, l'injection ayant été réalisée dans des conditions similaires de celles du procédé bien connu de moulage par injection dits « RTM » (« Resin Transfer Moulding »). Comme on peut le voir sur la figure 4, la pièce 300 comporte des porosités inter-fils 330 correspondant à des porosités initialement présentes dans le renfort fibreux qui n'ont pas été comblées avec la matrice SiC.

Dans le cas d'un matériau Oxyde/Oxyde, l'injection de la barbotine chargée est réalisée dans une texture fibreuse à double réseau de porosité, à savoir un réseau de porosité intra-fils et un réseau de porosité inter-fils. Ici encore, en raison d'un accès compliqué à l'ensemble du réseau de porosité dans la texture fibreuse, des difficultés d'injection et de filtration ont été observées conduisant à la présence de porosités ou de zones d'absence de matrice dans le matériau résultant.

WO 2016/102837 A1 décrit une aube de turbine en CMC et divulgue un procédé de fabrication par : formation d'une texture fibreuse, placement de la texture fibreuse dans un moule comportant une chambre d'imprégnation fermée par une membrane, injection sous pression d'une barbotine comprenant des particules céramiques, injection d'un fluide de compression pour forcer la barbotine à traverser la texture fibreuse, filtration et drainage de la phase liquide de la barbotine, démoulage, et frittage. Un tel procédé ne comporte pas d'étape de présaturation de la texture fibreuse dans le moule par injection d'un fluide porteur.

### Objet et résumé de l'invention

La présente invention a pour but de remédier aux inconvénients précités et de proposer une solution qui permet de réaliser des pièces en matériau composite notamment de type Oxyde/Oxyde ou CMC à partir d'une texture fibreuse de géométrie complexe et/ou épaisse, et ce de manière robuste et répétable en permettant un bon contrôle du dépôt et de la répartition des particules solides dans la texture fibreuse afin d'obtenir un matériau avec un très faible taux de porosité résiduelle et donc des propriétés améliorées.

A cet effet, l'invention propose un procédé de fabrication d'une pièce en matériau composite comprenant les étapes suivantes :
- formation d'une texture fibreuse à partir de fibres céramiques réfractaires,
- placement de la texture fibreuse dans une cavité de moulage d'un outillage d'injection,
- injection sous pression dans la texture fibreuse d'une barbotine comportant au moins une poudre de particules céramiques réfractaires ou de particules d'un précurseur de céramique réfractaire en suspension dans une phase liquide,
- filtration de la phase liquide de la barbotine et rétention de la poudre de particules céramiques réfractaires ou de particules d'un précurseur de céramique réfractaire à l'intérieur de ladite texture de manière à obtenir une préforme fibreuse chargée de particules céramiques réfractaires ou de particules d'un précurseur de céramique réfractaire,
- Densification de la texture fibreuse par traitement des particules céramiques réfractaires présentes dans la texture fibreuse afin de former une matrice réfractaire dans ladite texture,
caractérisé en ce que, après l'étape de placement de la texture fibreuse dans une cavité de moulage d'un outillage d'injection et avant l'étape d'injection sous pression de la barbotine, le procédé comprend une étape de pré-saturation de la texture fibreuse avec un fluide porteur consistant à injecter dans ladite texture un fluide porteur.

En pré-saturant la texture fibreuse avec un fluide porteur avant son injection avec la barbotine chargée, on établit un régime transitoire pour lequel les mécanismes de transfert de charges au sein de la texture sont bien contrôlés. Par conséquent, ceci permet d'optimiser le remplissage de la texture avec les particules céramiques réfractaires. L'étape de pré-saturation permet de s'affranchir des problèmes de mouillabilité de la texture fibreuse lors de l'injection de la barbotine chargée. Le remplissage des porosités présentes dans la texture fibreuse est facilité dès le démarrage de l'injection par dilution des particules dans le fluide porteur déjà présent dans la texture.

Selon une caractéristique particulière du procédé de l'invention, le fluide porteur correspond à la phase liquide de la barbotine. Cela permet de s'affranchir de possible déstabilisation des particules en suspension dans la barbotine.

Selon une autre caractéristique particulière du procédé de l'invention, l'étape de pré-saturation en fluide porteur et l'étape d'injection de la barbotine sont enchaînées en continu. On réduit ainsi le temps de fabrication de la pièce tout en optimisant l'effet du régime transitoire créé par l'étape de pré-saturation.

Selon une autre caractéristique particulière du procédé de l'invention, l'étape de pré-saturation est arrêtée lorsque la pression dans la cavité de moulage atteint une valeur de pression prédéterminée. On peut ainsi contrôler et valider l'étape de pré-saturation afin d'injecter la barbotine au moment optimal.

Selon une autre caractéristique particulière du procédé de l'invention, lors de l'étape de pré-saturation, le fluide porteur est injecté à un premier débit déterminé et, lors de l'étape d'injection de la barbotine chargée, ladite barbotine est injectée à un deuxième débit déterminé similaire ou différent du premier débit.

Selon une autre caractéristique particulière du procédé de l'invention, lors de l'étape de la formation de la texture fibreuse, les fils sont tissés suivant un tissage tridimensionnel ou multicouche.

Les fils de la texture peuvent être des fils formés de fibres constituées d'un ou plusieurs des matériaux suivants : l'alumine, la mullite, la silice, un aluminosilicate, un borosilicate, du carbure de silicium et du carbone.

Les particules céramiques réfractaires peuvent être en un matériau choisi parmi : l'alumine, la mullite, la silice, un aluminosilicate, un aluminophosphate, la zircone, un carbure, un borure et un nitrure.

Dans un exemple de réalisation, la pièce en matériau composite obtenue peut constituer une aube de turbomachine ou encore une pièce d'arrière-corps, une chambre de combustion, un volet, un bras postcombustion, un anneau de turbine, un mélangeur, un distributeur, etc.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique en coupe montrant une étape de pré-saturation en fluide porteur d'une texture fibreuse conformément à un mode de réalisation de l'invention,
- la figure 2 est une vue schématique en coupe montrant des étapes d'injection d'une barbotine chargée et de drainage de la phase liquide de la barbotine dans la texture fibreuse de la figure 1,
- la figure 3 présente deux photographies microscopiques d'une pièce en matériau composite SiC/SiC fabriquée conformément à un procédé de l'invention.
- la figure 4 présente deux photographies microscopiques d'une pièce en matériau composite SiC/SiC fabriquée selon l'art antérieur.

### Description détaillée de modes de réalisation

Le procédé de fabrication d'une pièce en matériau composite notamment de type Oxyde/Oxyde ou CMC conforme à la présente invention débute par la réalisation d'une texture fibreuse 10 destinée à former le renfort de la pièce.

La structure fibreuse est réalisée de façon connue par tissage au moyen d'un métier à tisser de type jacquard sur lequel on a disposé un faisceau de fils de chaînes ou torons en une pluralité de couches, les fils de chaînes étant liés par des fils de trame ou inversement. La texture fibreuse peut être réalisée par empilement de strates ou plis obtenu par tissage bidimensionnel (2D) ou de nappes unidirectionnelles (UD) de fils ou câbles ou nappes multidirectionnelle (nD) obtenue par superposition de plusieurs nappes UD dans des directions différentes et liaison des nappes UD entre elles par exemple par couture, par agent de liaison chimique ou par aiguilletage.

La texture fibreuse peut également être réalisée directement en une seule pièce par tissage tridimensionnel (3D). Par « tissage bidimensionnel », on entend ici un mode de tissage classique par lequel chaque fil de trame passe d'un côté à l'autre de fils d'une seule couche de chaîne ou inversement. Dans le cas de l'injection d'une barbotine chargée dans des textures fibreuses 2D, à savoir des textures obtenues par empilement de strates ou plis 2D, l'invention est particulièrement adaptée à des textures 2D d'épaisseur importante, c'est-à-dire des textures fibreuses 2D ayant une épaisseur d'au moins 0,5 mm, de préférence au moins 1 mm.

Par « tissage tridimensionnel » ou « tissage 3D » ou encore « tissage multicouche », on entend ici un mode de tissage par lequel certains au moins des fils de trame lient des fils de chaîne sur plusieurs couches de fils de chaîne ou inversement suivant un tissage correspondant à une armure de tissage qui peut être notamment choisie parmi une des armures suivantes : interlock, multi-toile, multi-satin et multi-sergé.

Par « armure ou tissu interlock », on entend ici une armure de tissage 3D dont chaque couche de fils de chaîne lie plusieurs couches de fils de trame avec tous les fils de la même colonne de chaîne ayant le même mouvement dans le plan de l'armure.

Par « armure ou tissu multi-toile », on désigne ici un tissage 3D avec plusieurs couches de fils de trame dont l'armure de base de chaque couche est équivalente à une armure de type toile classique mais avec certains points de l'armure qui lient les couches de fils de trame entre elles.

Par « armure ou tissu multi-satin », on désigne ici un tissage 3D avec plusieurs couches de fils de trame dont l'armure de base de chaque couche est équivalente à une armure de type satin classique mais avec certains points de l'armure qui lient les couches de fils de trame entre elles.

Par « armure ou tissu multi-sergé », on désigne ici un tissage 3D avec plusieurs couches de fils de trame dont l'armure de base de chaque couche est équivalente à une armure de type sergé classique mais avec certains points de l'armure qui lient les couches de fils de trame entre elles.

Les textures 3D, ou les textures formées par empilement de strates 2D ou nappes UD, présentent une géométrie complexe dans laquelle il est difficile d'introduire et de répartir de manière homogène des particules solides en suspension. Le procédé de l'invention est très bien adapté pour l'introduction d'une barbotine chargée dans des textures fibreuses tissées 3D.

Les fils utilisés pour tisser la texture fibreuse destinée à former le renfort fibreux de la pièce en matériau composite peuvent être notamment formés de fibres constituées d'un des matériaux suivants: l'alumine, la mullite, la silice, un aluminosilicate, un borosilicate, du carbure de silicium, du carbone ou d'un mélange de plusieurs de ces matériaux.

Dans l'exemple décrit ici, la texture fibreuse 10 est réalisée par tissage 3D entre une pluralité de fils de fibres de SiC, la texture étant consolidée après tissage par une infiltration chimique en phase gazeuse de SiC. La texture fibreuse 10 est ici destinée à former le renfort fibreux d'une pièce en matériau composite SiC/SiC (renfort en fibres SiC densifié par une matrice SiC).

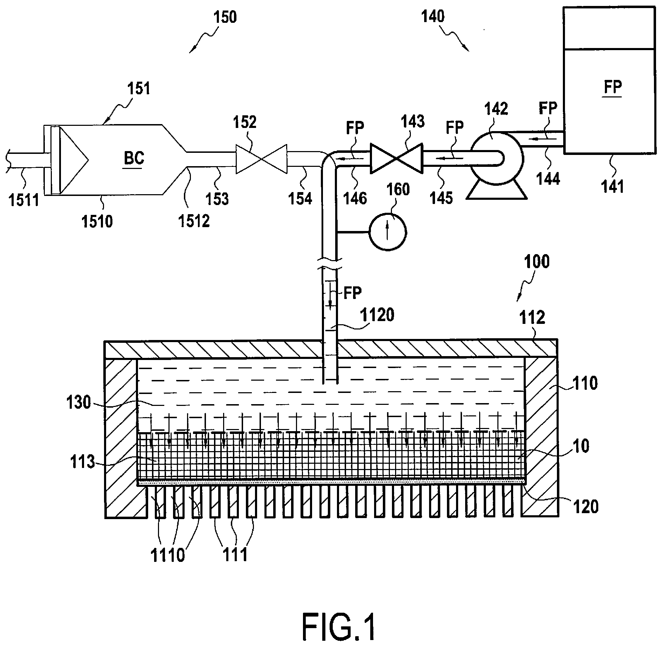

La figure 1 illustre un outillage d'injection 100 conforme à l'invention et qui comprend une enceinte 110 et un fond 111 formant ensemble une cavité de moulage 113. Un filtre 120 est présent sur le fond 111 de l'enceinte 110, le fond 111 comportant des ouvertures 1110. La partie supérieure de l'enceinte 110 est fermée par un couvercle 112 comportant un port d'injection 1120 relié d'une part à un système d'injection de fluide porteur 140 et, d'autre part, à un système d'injection de barbotine chargée 150. Toutefois, on ne sort pas du cadre de l'invention lorsque le fluide porteur et la barbotine chargée sont injectés au travers d'une pluralité de ports d'injection débouchant dans la cavité de moulage 113.

Plus précisément, le système d'injection de fluide porteur est constitué ici d'un réservoir 141 contenant un fluide porteur FP et dont le conduit de sortie 144 est relié à l'entrée d'une pompe péristaltique 142. La sortie de la pompe péristaltique 142 est reliée au port d'injection 1120 par des conduits 145 et 146 entre lesquels une vanne 143 est interposée. Le système d'injection de barbotine chargée 150 est constitué ici d'un pot d'injection 151 qui délimite une chambre 1510 contenant une barbotine chargée BC, le pot d'injection 151 étant en outre équipé d'un piston 1511 et, à l'opposé dudit piston, une ouverture d'évacuation 1512 reliée au port d'injection 1120 par des conduits 153 et 154 entre lesquels une vanne 152 est interposée.

Une fois la texture fibreuse 10 réalisée, celle-ci est placée dans l'outillage d'injection 100 qui permet, comme expliqué ci-après, de déposer des particules céramiques réfractaires ou des particules d'un précurseur de céramique réfractaire au sein de la texture fibreuse.

La figure 1 illustre l'étape de pré-saturation de la texture fibreuse 10 avec le fluide porteur FP conformément à l'invention. Le fluide porteur FP peut être choisi notamment parmi les fluides suivants : eau présentant différents pH, alcool (ex. éthanol, PVA), esters (ex. acétate d'éthyle), cétones (ex. acétone, méthyl éthyl cétone), alcanes (ex. héxadécane), alcènes (ex. toluène), THF, l'alcool polyvinylique (PVA), polyvidone (PVP). Le fluide porteur est de préférence de même nature que la phase liquide présente dans la barbotine chargée BC. Dans l'exemple décrit ici, le fluide porteur FP correspond à de l'eau à pH compris entre 9 et 10. Pendant cette étape, le système d'injection de barbotine chargée 150 est inopérant, le pot d'injection 151 ne délivrant pas de barbotine BC et la vanne 152 étant fermée. Du côté du système d'injection de fluide porteur, le fluide porteur FP est délivré à débit constant dans le port d'injection 1120 par la pompe péristaltique 142, la vanne 143 étant ouverte. Le fluide porteur est injecté suivant un débit compris entre 2 cm³/min et 1500 cm³/min. Dans l'exemple décrit ici, le fluide porteur constitué d'eau est délivré à un débit de 100 cm³/min. La régulation du débit du fluide porteur injecté peut être réalisée avec d'autres moyens qu'une pompe péristaltique comme par exemple avec un injecteur équipé d'un piston à débit contrôlé. La pompe péristaltique est commandée pour contrôler le débit de fluide porteur FP injecté dans la cavité de moulage 113 à au moins une valeur de débit déterminée.

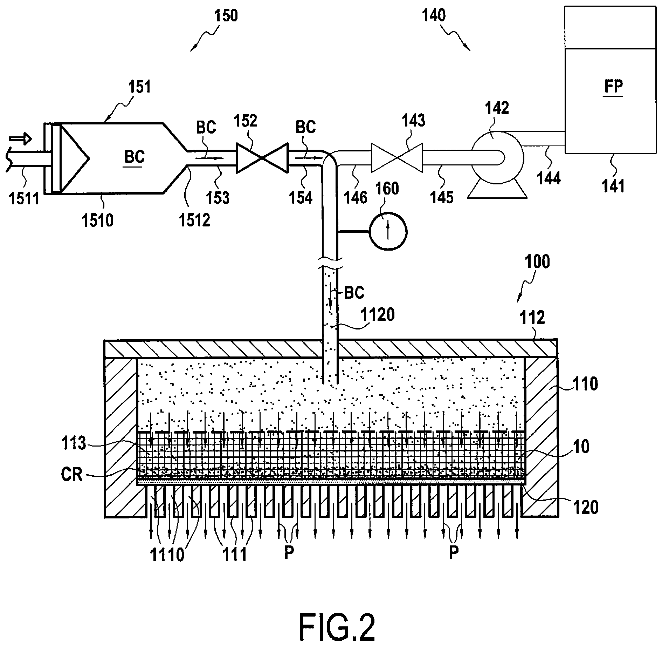

L'étape de pré-saturation se termine lorsque la saturation en fluide porteur dans la texture fibreuse est jugée complète, c'est-à-dire quand la pression dans la cavité de moulage 113 (perte de charge du système d'injection de fluide porteur) atteint un seuil de stabilité, par exemple 600 millibars. La mesure de l'atteinte du seuil de stabilité en pression à la fin de l'étape de pré-saturation peut être réalisée au moyen d'un capteur de pression 160, par exemple un manomètre, placé au niveau du port d'injection 1120 de l'outillage d'injection 100. La mesure de la pression dans la cavité de moulage peut être également réalisée avec des capteurs de pression placés sur la surface de la cavité de moulage (non représentés sur les figures 1 et 2).

Une fois l'étape de pré-saturation terminée, on procède à l'étape d'injection de la barbotine chargée BC dans la texture fibreuse 10 comme illustrée sur la figure 2. Dans l'exemple décrit ici, la barbotine BC comprend 20% en volume de particules de SiC présentant un diamètre moyen D50 compris entre 0,5 µm et 0,9 µm en suspension dans une eau à pH compris entre 9 et 10. Les particules peuvent également présenter une taille micronique (> 10 µm) ou submicronique.

Durant cette étape, la barbotine chargée BC est injectée dans la cavité de moulage 113 sous une pression ou un débit contrôlé. Pendant cette étape, le système d'injection de fluide porteur 140 est inopérant, la pompe péristaltique 142 étant arrêtée et la vanne 143 étant fermée. Du côté du système d'injection de barbotine chargée 150, la barbotine BC est délivrée à débit régulé dans le port d'injection 1120 par le pot d'injection 151, la vanne 152 étant ouverte, la barbotine BC étant ici injectée à un débit minimum de 2 cm³/min. La régulation du débit est pilotée par le piston 1511 du pot d'injection 151 de manière à délivrer la barbotine chargée à un débit inférieur au débit d'injection du fluide porteur. Sur la figure 2, la barbotine BC est injectée sous pression par le port d'injection 1120.

Comme illustré sur la figure 2, les particules de céramique réfractaire CR présentes dans la barbotine BC, ici des particules de SiC, sont retenues dans la texture fibreuse 10 grâce au filtre 120. Le filtre 120 est calibré pour retenir les particules d'oxyde réfractaires présentes dans la barbotine pendant que le liquide de cette dernière est évacué par les ouvertures 1110. Les particules d'oxyde réfractaire se déposent ainsi progressivement par sédimentation dans la texture. Le filtre 120 peut par exemple être constitué d'une pièce en matériau poreux par exemple en polytétrafluoroéthylène (PTFE) microporeux comme les produits « microporous PTFE » vendus par la société Porex®. On peut par exemple utiliser pour réaliser la pièce en matériau poreux, le matériau PM 0130 commercialisé par la société Porex® présentant une taille de pores comprise entre 1 µm et 2 µm, le matériau PM 0510 de la société Porex®, ou le matériau Bekipor®. D'une manière générale, tout dispositif, comme par exemple une grille métallique ou un filtre céramique, apte à retenir les particules injectées peut être utilisé pour l'étape de filtration. En combinaison avec l'injection de la barbotine chargée BC, un pompage P, par exemple au moyen d'une pompe à vide primaire (non représentée sur la figure 2), peut être réalisé du côté externe du fond 111 de l'enceinte 110 au travers des ouvertures 1110 de manière à améliorer la migration de la barbotine au travers de la texture fibreuse 10 et la filtration de sa phase liquide.

Une fois les étapes d'injection et de filtration effectuées, on obtient une préforme fibreuse chargée de particules céramiques réfractaires, ici des particules de SiC. La préforme obtenue est ensuite séchée puis démoulée, la préforme pouvant conserver après démoulage la forme adoptée dans la cavité de moulage.

La préforme est ensuite densifiée par un traitement des particules présentes dans la préforme. Dans le cas de particules d'oxyde par exemple, le traitement consiste à soumettre les particules àun traitement thermique de frittage, par exemple sous air à une température comprise entre 1000°C et 1200°C afin de fritter les particules et ainsi former une matrice céramique réfractaire dans la porosité de la préforme fibreuse. Dans le cas de particules de SiC, comme dans l'exemple décrit ici, les particules de SiC sont imprégnées avec du silicium par infiltration de la préforme avec du silicium fondu (procédé « MI » pour « Melt Infiltration ») de manière à former une matrice de SiC. On obtient alors une pièce en matériau composite, ici en matériau composite SiC/SiC, munie d'un renfort fibreux formé par la préforme fibreuse et présentant un taux volumique de matrice élevé avec une répartition homogène de la matrice céramique réfractaire dans tout le renfort fibreux.

La figure 3 montre deux photographies microscopiques d'une coupe (coupe dans le sens trame : la longueur de la photographie correspondant au sens trame) d'une pièce 200 en matériau composite SiC/SiC fabriquée selon un procédé de l'invention comprenant :
- la réalisation d'une texture fibreuse en fibres SiC formée ici par tissage 3D entre des couches de fils de trame et de fils de chaîne suivant une armure interlock ;
- la pré-densification ou consolidation de la texture fibreuse par infiltration chimique en phase gazeuse de SiC ;
- le placement de la texture fibreuse consolidée dans un outillage d'injection similaire à l'outillage 100 décrit ci-avant ;
- la pré-saturation de la texture fibreuse par un fluide porteur consistant à injecter dans la texture de l'eau ayant un pH compris entre 9 et 10 à un débit de 100 cm³/min;
- l'injection d'une barbotine chargée dans la texture fibreuse à un débit de 2 cm³/min, la barbotine étant constituée de particules de SiC en suspension dans de l'eau ayant un pH compris entre 9 et 10 ;
- la filtration de la phase liquide de la barbotine de manière à permettre localement l'accumulation de charges dans la texture et, par conséquent, d'augmenter le taux de charges dans cette dernière ;
- la densification de la préforme par infiltration avec du silicium fondu pour former une matrice SiC.

Sur la figure 3, la pièce 200 résultante comporte un renfort fibreux 210 formé de fils de SiC et densifié par une matrice SiC 220. Comme on peut le voir sur la figure 3, la pièce 200 ne comporte pas ou très peu de porosités inter-fils visibles, ce qui démontre l'efficacité de l'étape de pré-saturation de la texture fibreuse dans l'optimisation du remplissage de celle lors de l'injection ultérieure de la barbotine chargée.

Le procédé de l'invention n'est pas limité à l'injection d'une barbotine comprenant des particules de SiC en suspension dans de l'eau. Plus généralement, les barbotines utilisées peuvent être une suspension comportant des particules céramiques réfractaires présentant une dimension particulaire moyenne comprise entre 0,1 µm et 10 µm. La teneur volumique en particules céramiques réfractaires dans la barbotine peut, avant l'injection, être comprise entre 1% et 50%, préférentiellement entre 20% et 35% volumique. Les particules céramiques réfractaires peuvent comporter un matériau choisi parmi : l'alumine, la mullite, la silice, les aluminosilicates, les aluminophosphates, les carbures, les borures, les nitrures et les mélanges de tels matériaux. En fonction de leur composition de base, les particules céramiques réfractaires peuvent, en outre, être mélangées avec des particules d'alumine, de zircone, d'aluminosilicate, d'un oxyde de terre rare, de silicate de terre rare (lequel peut par exemple être utilisé dans les barrières environnementales ou thermiques) ou toute autre charge permettant de fonctionnaliser la pièce en matériau composite à obtenir comme le noir de carbone, le graphite ou le carbure de silicium.

Le milieu ou phase liquide des barbotines peut également, par exemple, comporter une phase aqueuse présentant un pH acide (i.e. un pH inférieur à 7) et/ou une phase alcoolique comportant par exemple de l'éthanol. La barbotine peut comporter un acidifiant tel que de l'acide nitrique et le pH du milieu liquide peut par exemple être compris entre 1,5 et 4. La barbotine peut, en outre, comporter un liant organique comme de l'alcool polyvinylique (PVA) lequel est notamment soluble dans l'eau. Plus généralement, la barbotine peut comprendre :
- un fluide porteur,
- un dispersant (ex. pH adapté),
- un liant (ex. PVA),
- un plastifiant (ex. PVA),
- un anti-moussant,
- un agent mouillant.

## Revendications

1. Procédé de fabrication d'une pièce en matériau composite comprenant les étapes suivantes :
- formation d'une texture fibreuse (10) à partir de fibres céramiques réfractaires,
- placement de la texture fibreuse (10) dans une cavité de moulage (113) d'un outillage d'injection (100),
- injection sous pression dans la texture fibreuse (10) d'une barbotine (BC) comportant au moins une poudre de particules céramiques réfractaires ou de particules d'un précurseur de céramique réfractaire (CR) en suspension dans une phase liquide,
- filtration de la phase liquide de la barbotine et rétention de la poudre de particules céramiques réfractaires ou de particules d'un précurseur de céramique réfractaire à l'intérieur de ladite texture de manière à obtenir une préforme fibreuse chargée de particules céramiques réfractaires ou de particules d'un précurseur de céramique réfractaire,
- densification de la texture fibreuse par traitement des particules céramiques réfractaires présentes dans la texture fibreuse afin de former une matrice réfractaire dans ladite texture,
**caractérisé en ce que**, après l'étape de placement de la texture fibreuse dans une cavité de moulage d'un outillage d'injection et avant l'étape d'injection sous pression de la barbotine (BC), le procédé comprend une étape de pré-saturation de la texture fibreuse (10) avec un fluide porteur (FP) consistant à injecter dans ladite texture un fluide porteur.

2. Procédé selon la revendication 1, dans lequel le fluide porteur (FB) correspond à la phase liquide de la barbotine (BC).

3. Procédé selon la revendication 1 ou 2, dans lequel l'étape de pré-saturation en fluide porteur (FP) et l'étape d'injection de la barbotine (BC) sont enchaînées en continu.

4. Procédé selon l'une quelconque des revendications 1 à 3, dans lequel l'étape de pré-saturation est arrêtée lorsque la pression dans la cavité de moulage (113) atteint une valeur de pression prédéterminée.

5. Procédé selon l'une quelconque des revendications 1 à 4, dans lequel, lors de l'étape de pré-saturation, le fluide porteur (FP) est injecté à un premier débit déterminé et dans lequel, lors de l'étape d'injection de la barbotine (BC), ladite barbotine est injectée à un deuxième débit déterminé similaire ou différent du premier débit.

6. Procédé selon l'une quelconque des revendications 1 à 5, **caractérisé en ce que**, lors de l'étape de la formation de la texture fibreuse (10), les fils sont tissés suivant un tissage tridimensionnel ou multicouche.

7. Procédé selon l'une quelconque des revendications 1 à 6, **caractérisée en ce que** les fils de la texture fibreuse (10) sont formés de fibres constituées d'un ou plusieurs des matériaux suivants : l'alumine, la mullite, la silice, un aluminosilicate, un borosilicate, du carbure de silicium et du carbone.

8. Procédé selon l'une quelconque des revendications 1 à 7, **caractérisé en ce que** les particules céramiques réfractaires sont en un matériau choisi parmi : l'alumine, la mullite, la silice, un aluminosilicate, un aluminophosphate, la zircone, un carbure, un borure et un nitrure.

9. Procédé selon l'une quelconque des revendications 1 à 8, **caractérisé en ce que** la pièce en matériau composite obtenue constitue une aube de turbomachine, une pièce d'arrière-corps, une chambre de combustion, un volet, un bras postcombustion, un anneau de turbine, un mélangeur ou un distributeur.

## Patentansprüche

1. Verfahren zur Herstellung eines Teils aus Verbundmaterial, das die folgenden Schritte umfasst:
- Bilden einer Fasertextur (10) ausgehend von feuerfesten Keramikfasern,
- Platzieren der Fasertextur (10) in einem Formhohlraum (113) eines Spritzwerkzeugs (100),
- Einspritzung einer Aufschlämmung (BC), die mindestens ein Pulver aus feuerfesten Keramikpartikeln oder Partikeln eines feuerfesten Keramikvorprodukts (CR) in Suspension in einer flüssigen Phase umfasst, unter Druck in die Fasertextur (10),
- Filterung der flüssigen Phase der Aufschlämmung und Rückhalten des Pulvers aus feuerfesten Keramikpartikeln oder Partikeln eines feuerfesten Keramikvorprodukts im Inneren der Textur, derart, dass eine mit feuerfesten Keramikpartikeln oder mit Partikeln eines feuerfesten Keramikvorprodukts beladene Faservorform erhalten wird,
- Verdichtung der Fasertextur durch Behandlung der in der Fasertextur vorhandenen feuerfesten Keramikpartikel, um eine feuerfeste Matrix in der Textur zu bilden,
**dadurch gekennzeichnet, dass** das Verfahren nach dem Schritt der Platzierung der Fasertextur in einem Formhohlraum eines Spritzwerkzeugs und vor dem Schritt des Einspritzens der Aufschlämmung (BC) unter Druck einen Schritt der Vorsättigung der Fasertextur (10) mit einem Trägerfluid (FP) umfasst, der darin besteht, ein Trägerfluid in die Textur einzuspritzen.

2. Verfahren nach Anspruch 1, wobei das Trägerfluid (FB) der flüssigen Phase der Aufschlämmung (BC) entspricht.

3. Verfahren nach Anspruch 1 oder 2, wobei der Schritt der Vorsättigung mit Trägerfluid (FP) und der Schritt der Einspritzung der Aufschlämmung (BC) ununterbrochen aneinandergereiht werden.

4. Verfahren nach einem der Ansprüche 1 bis 3, wobei der Schritt der Vorsättigung angehalten wird, wenn der Druck in dem Formhohlraum (113) einen vorbestimmten Druckwert erreicht.

5. Verfahren nach einem der Ansprüche 1 bis 4, wobei bei dem Schritt der Vorsättigung das Trägerfluid (FP) mit einer ersten bestimmten Durchflussmenge eingespritzt wird und wobei bei dem Schritt der Einspritzung der Aufschlämmung (BC) die Aufschlämmung mit einer zweiten bestimmten Durchflussmenge eingespritzt wird, die der ersten Durchflussmenge ähnlich ist oder sich davon unterscheidet.

6. Verfahren nach einem der Ansprüche 1 bis 5, **dadurch gekennzeichnet, dass** bei dem Schritt der Bildung der Fasertextur (10) die Fäden gemäß einem dreidimensionalen oder mehrschichtigen Gewebe gewebt werden.

7. Verfahren nach einem der Ansprüche 1 bis 6, **dadurch gekennzeichnet, dass** die Fäden der Fasertextur (10) aus Fasern gebildet sind, die aus einem oder mehreren der folgenden Materialien bestehen: Aluminiumoxid, Mullit, Siliziumoxid, einem Aluminosilikat, einem Borosilikat, Siliziumkarbid und Kohlenstoff.

8. Verfahren nach einem der Ansprüche 1 bis 7, **dadurch gekennzeichnet, dass** die feuerfesten Keramikpartikel aus einem Material bestehen, das ausgewählt ist aus: Aluminiumoxid, Mullit, Siliziumoxid, einem Aluminosilikat, einem Aluminiumphosphat, Zirconium, einem Carbid, einem Borid und einem Nitrid.

9. Verfahren nach einem der Ansprüche 1 bis 8, **dadurch gekennzeichnet, dass** das erhaltene Teil aus Verbundmaterial eine Turbomaschinenschaufel, ein Heckteil, eine Brennkammer, eine Klappe, einen Nachverbrennungsarm, einen Turbinenring, einen Mischer oder einen Verteiler bildet.

## Claims

1. A method for manufacturing a part made of composite material comprising the following steps:
- forming a fibrous texture (10) from refractory ceramic fibers,
- placing the fibrous texture (10) in a mold cavity (113) of an injection tooling (100),
- injecting into the fibrous texture (10) a slurry (BC) including at least one powder of refractory ceramic particles or particles of a refractory ceramic precursor (CR) suspended in a liquid phase,
- filtering the liquid phase of the slurry and retaining the powder of refractory ceramic particles or particles of a refractory ceramic precursor inside said texture so as to obtain a fibrous preform loaded with refractory ceramic particles or particles of a refractory ceramic precursor,
- densifying the fibrous texture by treatment of the refractory ceramic particles present in the fibrous texture in order to form a refractory matrix in said texture,
**characterized in that**, after the step of placing the fibrous texture in a mold cavity of an injection tooling and before the step of injecting the slurry (BC) under pressure, the method comprises a step of pre-saturating the fibrous texture (10) with a carrier fluid (FP) consisting in injecting into said texture a carrier fluid.

2. The method according to claim 1, wherein the carrier fluid (FB) corresponds to the liquid phase of the slurry (BC).

3. The method according to claim 1 or 2, wherein the carrier fluid (FP) pre-saturation step and the slurry (BC) injection step are continuously linked.

4. The method according to any one of claims 1 to 3, wherein the pre-saturation step is stopped when the pressure in the mold cavity (113) reaches a predetermined pressure value.

5. The method according to any one of claims 1 to 4, wherein, during the pre-saturation step, the carrier fluid (FP) is injected at a first determined flow rate and wherein, during the slurry (BC) injection step, said slurry is injected at a second determined flow rate similar to or different from the first flow rate.

6. The method according to any one of claims 1 to 5, **characterized in that**, during the fibrous texture formation step (10), the yarns are woven in a three-dimensional or multilayer weaving.

7. The method according to any one of claims 1 to 6, **characterized in that** the yarns of the fibrous texture (10) are formed of fibers made of one or several of the following materials: the alumina, the mullite, the silica, an aluminosilicate, a borosilicate, silicon carbide and carbon.

8. The method according to any one of claims 1 to 7, **characterized in that** the refractory ceramic particles are made of a material chosen from: the alumina, the mullite, the silica, an aluminosilicate, an aluminophosphate, the zirconia, a carbide, a boride and a nitride.

9. The method according to any one of claims 1 to 8, **characterized in that** the part made of composite material obtained constitutes a turbomachine vane, an after-body part, a combustion chamber, a flap, a post-combustion arm, a turbine ring, a mixer or a distributor.
